## Europäisches Patentamt
## European Patent Office
## Office européen des brevets

(19)

(11) Publication number: **0 330 490 B1**

(12) **EUROPEAN PATENT SPECIFICATION**

(45) Date of publication of the patent specification: **27.12.90**

(51) Int. Cl.⁵: **E03F 1/00, B64D 11/02**

(21) Application number: **89301824.2**

(22) Date of filing: **24.02.89**

(54) Vacuum sewage system, waste tank therefor and transport vehicle incorporating such a system.

(30) Priority: **26.02.88 US 160694**

(43) Date of publication of application:
**30.08.89 Bulletin 89/35**

(45) Publication of the grant of the patent:
**27.12.90 Bulletin 90/52**

(84) Designated Contracting States:
**AT CH DE FR GB IT LI**

(56) References cited:
**FR-A- 2 087 932**
**US-A- 2 671 527**
**US-A- 2 890 764**
**US-A- 3 590 560**

(73) Proprietor: **Oy Wärtsilä Ab, John Stenbergs strand 2 Box 230, SF-00101 Helsinki 10(FI)**

(72) Inventor: **Ströby, Lennart, Björnekullavägen 109, S-291 93 Kristianstad(SE)**
Inventor: **Nilsson, Ake, 5347 Hosaby, S-294 00 Sölvesborg(SE)**
Inventor: **Ask, Arne, Adamsvägen 1, S-296 00 Ahus(SE)**
Inventor: **Stahl, Gary L., 15090 Edwardsville Road, Winnebago Illinois 61088(US)**
Inventor: **Oldfelt, Sven, Svenonius Vag 17, Resaro, S-185 00 Vaxholm(SE)**
Inventor: **Dubler, Paul L., 1912 East Riverside Boulevard, Rockford Illinois 61111(US)**

(74) Representative: **Newby, John Ross et al, J.Y. & G.W. Johnson Furnival House 14/18 High Holborn, London WC1V 6DE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to a vacuum sewage system, particularly for use aboard transport vehicles such as aircraft, boats, buses and trains (particularly high-speed trains), a waste tank therefor and a transport vehicle provided with a vacuum sewage system.

A vacuum sewage system installed in a vehicle includes a waste tank for collecting and temporarily storing sewage. The tank has an inlet opening for connection through a sewer pipe to a source of sewage, such as a toilet, and for admitting air and sewage to the tank, and an outlet opening for exhausting air from the tank. The outlet opening is connected through a duct to the suction side of a vacuum generator, for instance a blower, the pressure side of which vacuum generator vents to the atmosphere. Operation of the vacuum generator may be controlled by a pressure sensor, which is located in the duct immediately upstream of the vacuum generator, in the tank or in the sewer pipe, and normally functions to maintain a pressure difference above a threshold level between the tank and the interior of the vehicle, or to produce such a pressure difference when flushing of a toilet, or another sewage-supplying operation, is initiated. In the case of a vacuum sewage system installed in an aircraft, the vacuum generator is not needed when the pressure outside the aircraft cabin is sufficiently low to create the desired pressure difference.

In operation of a such a vacuum sewage system connected to a toilet, flushing of the toilet is usually initiated by actuating a flush button or like operating member. The pressure sensor disables the flush member from initiating a flushing cycle if the pressure difference sensed by the pressure sensor is below the threshold value. The tank can also be provided with a level sensor for disabling the flush member when the tank is full. When a flushing cycle is initiated, a discharge valve connected between the sewer pipe and the source of sewage (say a toilet bowl) is opened. The pressure difference between the interior of the toilet bowl and the interior of the sewer pipe causes sewage in the toilet bowl to be propelled from the bowl into the sewer pipe. Air enters the sewer pipe behind the sewage and pushes it towards the tank. The discharge valve is held open for a predetermined time and then closes. After the discharge valve is closed, the sewage in the sewer pipe continues to travel towards the tank as the air downstream of the closed valve but upstream of the sewage expands. The flushing cycle is then complete and a new flushing cycle may take place. Preferably, it takes only one flushing cycle to transport sewage from the source to the waste tank. When the sewage enters the waste tank, it can do so at quite a high speed. Accordingly hard objects, such as small bottles, may impinge on the tank wall with a substantial impact and there is a danger that the tank will be damaged, especially in the case of a vacuum sewage system installed aboard an aircraft since, in order to minimize weight, the waste tank may be of relatively flimsy construction.

It has been proposed that the inlet opening for the waste tank of an aircraft vacuum sewage system be formed in the top wall of the waste tank which is horizontal in level flight and be coupled to the sewer pipe by a connection fitting which forces the sewage to enter the tank in a direction vertically downwards. In accordance with this prior proposal, the outlet opening is spaced from the inlet opening and is provided with a separator for preventing water from leaving the tank.

This prior proposal when applied to an aircraft vacuum sewage system is subject to disadvantage, in that forces caused by aircraft movement may result in quite vigorous movement of the sewage in the tank and this may cause sewage to enter the separator and block it. The pressure drop across the separator would increase, which may result in too high a pressure appearing in the tank and in the sewer pipe. If the toilet was then flushed, there might not be a sufficiently low pressure in the waste tank for the sewage to be withdrawn completely from the source into the sewer pipe. Consequently, there would be an increased probability that the discharge valve would be blocked. Moreover, sewage that had entered the separator may be pushed through the separator into the blower, which might result in damage to the blower. In order to avoid blockage of the separator, the level sensor should be placed so as to disable the flush member when the level of sewage in the tank reaches about 25 cm below the top of the tank. Typically, the height of the tank would be only about 75 cm, and therefore a large proportion of the volume of the tank would not be available for storage of sewage.

It appears that the separator of the waste tank of the prior proposed aircraft vacuum sewage system would be blocked because sewage and air entering the waste tank through the inlet opening impinge on the surface of the sewage in the tank and create a wave, which enlarges as the air expands. As the wave enlarges, it propagates away from the inlet opening towards the outlet opening and enters the separator.

This invention thus seeks to provide a vacuum sewage system which permits sewage to enter the tank with low probability of discharge valve blockage and which separates the sewage inlet to the tank and air outlet from the tank in a manner reducing the risk of sewage being entrained with the air and passing out through the said air outlet.

What constitutes the invention is defined in the following claims and is cast in terms of a vacuum sewage system, a tank therefor and a vehicle.

A preferred embodiment of the invention is a waste tank for a vacuum sewage system installed in a transport vehicle. The tank comprises a receptacle portion for receiving sewage up to a predetermined maximum filling level. The tank defines an inlet opening for admitting air and sewage to the tank and an outlet opening for exhausting air from the tank. The inlet and outlet openings are above the maximum filling level of the tank. The tank also comprises an inlet separator that separates air and sewage entering the tank by way of the inlet opening using the kinetic energy of the sewage, and thereby dissipates kinetic energy of the sewage.

Dissipating kinetic energy of the sewage in the inlet separator makes it possible to ensure that the sewage does not enter the receptacle portion of the tank in a violent fashion, such as to contribute to vigorous movement of the sewage or cause splashing, which might coat level detectors, for example, and leave a residue that cannot readily be removed once it dries. Preferably, the inlet and outlet openings are defined by a dome structure which is in open communication with the receptacle portion of the tank and projects upwardly from the receptacle portion. By providing the inlet and outlet openings in a dome structure, which may be the upper end of a vertical tank, the overall volume of the tank is minimized while the proportion of the volume of the tank that is available for holding sewage is maximized. Moreover, the inlet and outlet openings can be close together, so that if sewage entering the tank creates a wave, by the time tha the wave has enlarged substantially it will be beyond the outlet opening. A closure device may be provided to ensure that sewage will not enter the outlet opening.

For a better understanding of the invention, and to show how the same may be carried into effect, reference will now be made, by way of example, to the accompanying drawings, in which:

Figure 1 is a diagrammatic illustration of part of an aircraft equipped with a vacuum sewage system according to this invention which includes a waste tank,

Figure 2 is an enlarged sectional view of part of the waste tank of the vacuum sewage system of Figure 1, and

Figure 3 is a partial sectional view taken on the line III-III of Figure 2.

Figure 4 is a vertical, part-sectional view of an alternative form of waste tank shown in Figures 2 and 3,

Figure 5 is a partial vertical sectional view taken at right angles to the section plane of Figure 4, and

Figure 6 illustrates another form of waste tank that may be included in the vacuum sewage system.

In the drawings, like reference numerals designate like components.

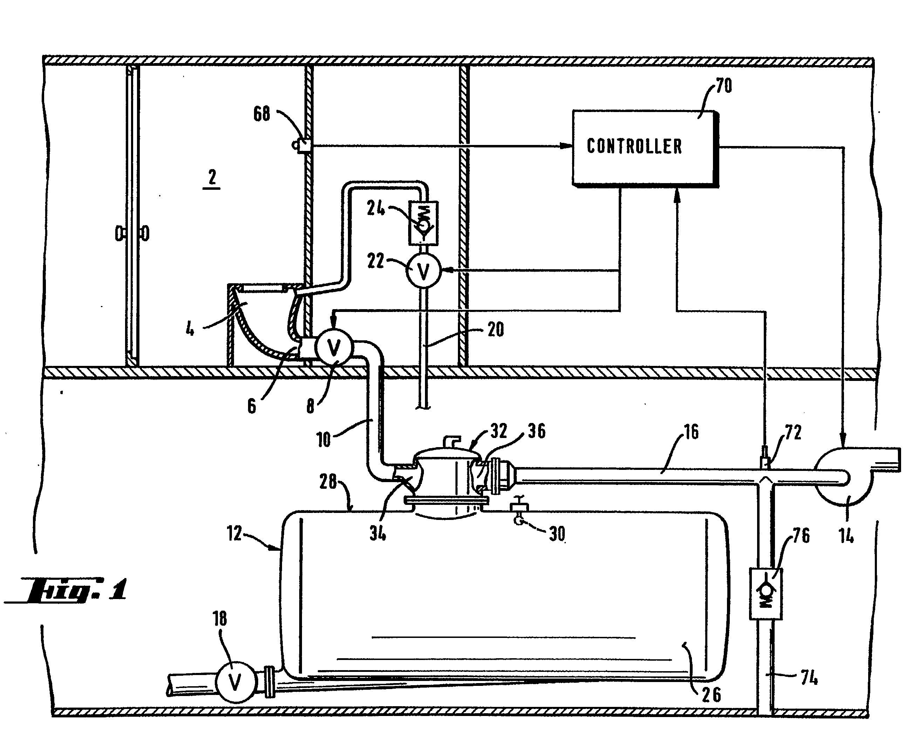

Figure 1 shows the invention installed in an aircraft, but it should be understood that the application of the invention is not limited to aircraft. The invention can also be used in other vehicles in particular in boats, buses and trains. In an aircraft at an altitude such that there is a pressure difference of at least 250 mbar between the cabin pressure and the ambient pressure, vacuum for operating the system is available directly from the ambient atmosphere. Typically, cabin pressure is approximately equal to ambient pressure at an altitude of about 2,400 m, and sufficient pressure difference will exist when the aircraft is at an altitude greater than about 5,000 m.

The aircraft that is partially illustrated in Figure 1 has its passenger cabin pressurised and includes at least one toilet compartment 2 equipped with a vacuum toilet. The vacuum toilet comprises a waste-receiving bowl 4 which defines an interior space for receiving waste material and has an outlet opening 6. The outlet opening communicates with one side of a discharge valve 8. The opposite side of the discharge valve communicates, via a sewer pipe 10, with a waste tank 12. The discharge valve 8 controls flow of material from the bowl 4 to the pipe 10 and the waste tank 12. An electrically driven blower 14 has its suction side connected to the tank 12 by way of an exhaust duct 16 for establishing a partial vacuum in the tank, and has its pressure side connected to the ambient atmosphere outside the pressurised cabin. The tank 12 is also provided with a valve 18 or similar means for emptying the tank.

A flush member (e.g. a button) 68 is installed in the toilet compartment 2 and, when actuated, applies a signal to a controller 70. The controller responds to the signal provided by the flush member 68 by causing the discharge valve 8 to open. The controller 70 also controls operation of the blower 14. A pressure sensor 72 senses the pressure in the vacuum sewage system at a location that is normally in open communication with the interior space of the sewer pipe 10. For example, the pressure sensor might be positioned in the exhaust duct 16, just upstream of the blower 14. The pressure sensor 72 provides a signal representing the pressure difference between the interior space of the sewer pipe 10 and the air pressure in the compartment 2. The controller 70 is designed to respond to a signal indicating that the pressure difference has fallen below a threshold level by energising the blower 14, so that a pressure difference above the threshold level is maintained substantially continuously. Alternatively, the controller 70 might be programmed to energise the blower 14 only when the pressure difference is below the threshold value and the flush member 68 has been actuated, so that a pressure difference above the threshold level is maintained on an intermittent, as needed, basis. When the aircraft is at an altitude such that the difference between the cabin pres sure and the pressure of the ambient atmosphere outside the cabin is greater than about 250 mbar, the ambient atmosphere in communication with the tank by way of a by-pass duct 74 and a check valve 76, is at a sufficiently low pressure to create the desired pressure difference, and accordingly the blower 14 is not energised.

A rinse water supply pipe 20 opens into the bowl 4 by way of a spray nozzle arrangement adjacent the rim of the bowl 4. The rinse water supply pipe 20 is connected to a source of water (not shown) under pressure. A remote-controlled, solenoid-operated or pneumatically-operated, rinse water valve 22 is provided in the water supply pipe 20. A vacuum breaker valve 24 is disposed downstream of the valve 22, to prevent reverse flow in the pipe 20 in the event that the pressure upstream of the valve 24 falls below the pressure in the waste-receiving bowl 4.

The waste tank 12 shown in Figure 1 has a generally cylindrical receptacle portion and is disposed horizontally with its longitudinal axis generally parallel to the longitudinal axis of the fuselage of the aircraft, so that it is generally circular in vertical cross-section in level flight. The diameter of the tank typically is in the range from about 45 cm to about 180 cm, and the tank has a wall 26 which includes a top wall portion 28 extending over substantially the entire length of the tank. A level sensor 30 is positioned slightly beneath the top wall portion 28. When the level of sewage in the tank reaches the level sensor 30, the level sensor provides a signal to the controller 70 for maintaining the discharge valve 8 in its closed condition.

The tank 12 also has a generally cylindrical dome structure 32 which projects upwardly from the top wall portion 28. The dome structure 32 may be about 15 to 30 cm in diameter and 20 to 30 cm high. Thus, the tank 12 has a linear dimension in the axial direction that is from about 1.5 to 12 times a linear dimension of the dome structure in the same direction. The length of the tank need be no greater than the diameter of the dome structure, but generally the length of the tank will be substantially greater than the diameter of the dome structure. For example, the tank may typically be 75 to 95 cm long, although it may be considerably longer, e.g. 200 cm. Therefore, in the case of a horizontally-disposed cylindrical tank, the horizontal sectional area of the dome is less than about 0.6 times the maximum horizontal sectional area of the tank. The dome structure defines an inlet opening 34 which is connected to the sewer pipe 10 and an outlet opening 36 which is connected to the exhaust duct 16. The sewer pipe 10 is parallel to the longitudinal axis of the tank 12 where it opens into the dome structure 32, and accordingly the flow of sewage and air that enters the dome structure by way of the sewer pipe 10 is, in level flight, directed horizontally.

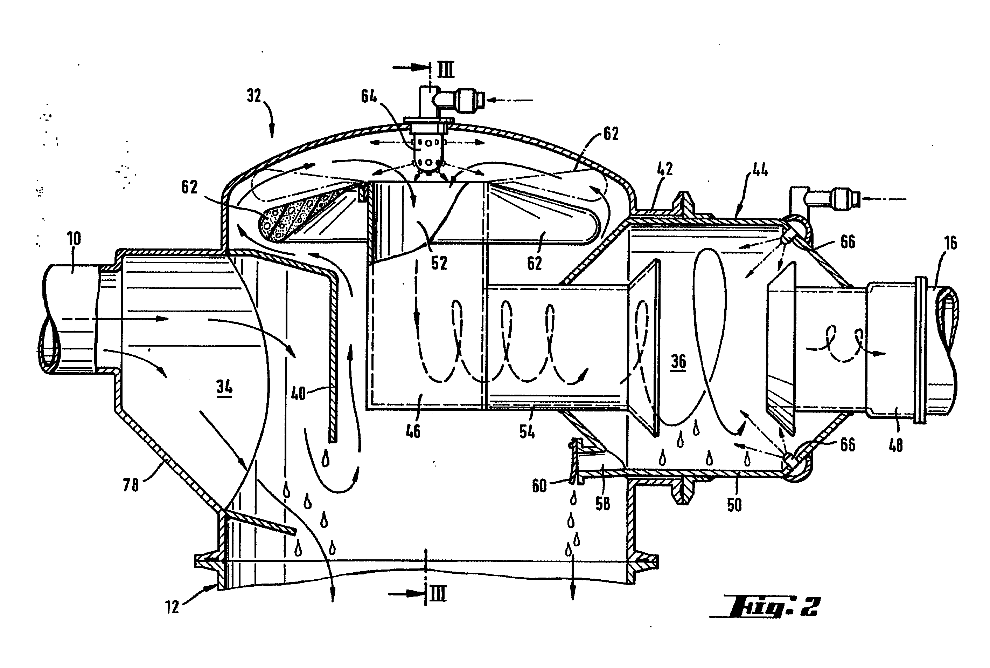

The dome structure 32 is provided with an entrance box 78 (Figure 2) where it is connected to the sewer pipe 10. The box 78 is substantially circular in vertical cross section as drawn, and its diameter increases in the direction of flow from the sewer pipe 10. Therefore, the velocity of air flowing through the sewer pipe 10 is reduced as it enters the entrance box 78. A vertical deflector plate 40 is mounted in the dome structure 32 to intercept the flow of sewage and air leaving the pipe 10.

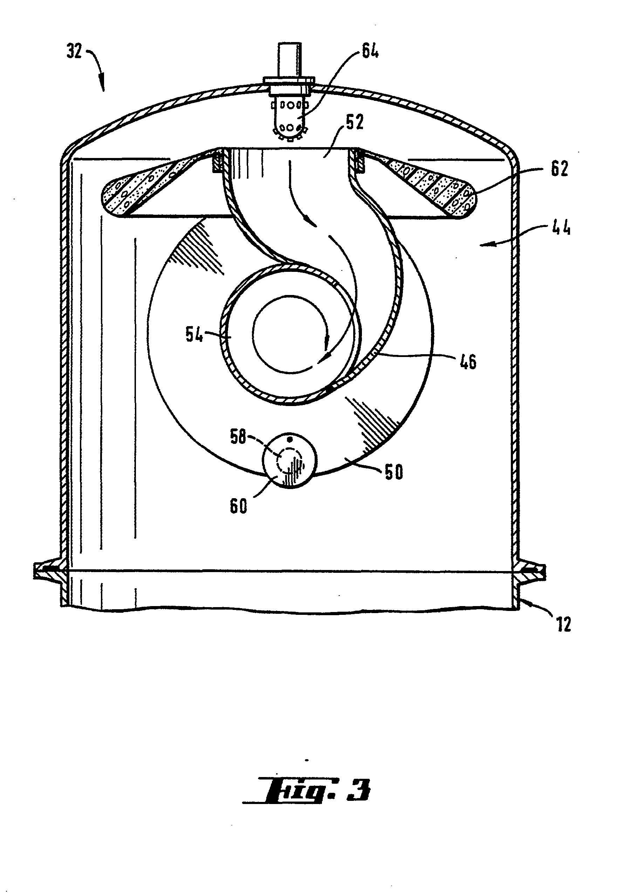

The outlet opening 36 is defined by a sleeve 42, which also is horizontal in level flight. The sleeve 42 accommodates a cyclonic separator 44 which has an inlet duct 46 (also shown in Figure 3) inside the dome structure 32 and an outlet duct 48 outside the dome structure. The inlet duct 46, which has an inlet port 52 located near the top of the dome structure and opening upwards, is connected to the outlet duct 48 by a duct 54 and a separation section 50. The outlet duct 48 is connected to the exhaust duct 16. The reduced pressure created by the blower 14 (or the atmosphere via duct 74) draws air entering the dome structure from the sewer pipe 10 under the deflector plate 40 and upwardly toward the top of the dome structure. At the top of the dome structure, the air enters the inlet port 52 and is drawn sequentially through the inlet duct 46, the duct 54, the separation section 50 and the outlet duct 48. The air passing through the dome structure therefore follows a serpentine path. Mist particles entrained in the air flow will follow this same path and will enter the inlet duct 46. The walls of the inlet duct 46 converge in accordance with a spiral form, and accordingly air that enters the duct 54 from the inlet duct 46 has a strong rotational component of velocity about the central axis of the duct 54. Therefore, air passes through the duct 54 along a generally helical path. The outlet 48 is axially aligned with the duct 54 but is spaced therefrom by a distance of about 6 cm. The separation section 50 surrounds the ends of the two ducts 48 and 54. When air, with mist particles entrained therein, leaves the duct 54, the mist particles are thrown out from the common axis of the ducts 48 and 54 by centrifugal force and are thereby separated from the flowing air. The mist particles hit the interior surface of the separation section 50, where they form a film of liquid, and the thus-collected liquid is returned to the tank 12 by way of a drain passage 58. The drain passage 58 is provided with a closure flap 60 which stops air from being drawn into the separation section 50 by way of the drain passage 58.

Larger droplets of water and small particles of sewage have sufficient momentum that when the air flow changes direction in order to pass under the deflector plate 40 and upwards towards the top of the dome structure, the droplets and particles do not change direction but continue to travel downwards into the tank. The speed of these droplets and particles decreases because they are no longer entrained in the air flow. Somewhat smaller particles and droplets are separated from the air flow as it passes to the cyclonic separator 44. More massive particles and lumps of sewage have sufficient momentum that they strike the deflector plate 40 and fall at relatively low speed into the tank. Any small hard objects entrained in the flow of sewage also strike the deflector plate, and therefore they do not impinge at high speed on the wall of the tank.

In a conventional waste tank for a vacuum sewage system, separation of sewage from the air that propelled the sewage into the tank is achieved in the tank by the action of gravity, which causes more dense material (sewage) to move to a position having a lower gravitational potential and less dense material (air) to move to a position having a higher gravitational potential, so as to minimize the total gravitational potential energy of the air/sewage system. By use of the deflector plate, a proportion of the kinetic energy of the sewage entering the tank is used to achieve a more efficient separation than is achieved by gravity alone, and in so doing the kinetic energy of the sewage is dissipated. Consequently, the sewage entering the tank does not cause violent splashing or create waves.

There is, of course, a possibility that small particles of sewage will enter the cyclonic separator 44 with the air flow and be separated therefrom in the separation section. In order to keep the interior of the separator clean, its internal surfaces may be coated with PTFE or similar non-stick material and spray nozzles 66 are provided for periodically scouring and rinsing the interior surface of the cyclonic separator, e.g. when the tank is emptied.

There is also a possibility that wave motion of sewage in the tank due to movement of the aircraft would cause sewage to enter the dome structure. Escape of wave-borne sewage from the dome structure by way of the cyclonic separator is prevented by a reversing annular closure member 62. The closure member, which is less dense than the liquid sewage collected in the tank (e.g. it is made of silicone rubber) has a thickness which increases from its inner periphery towards its outer periphery. The inner periphery of the closure member 62 is connected to the periphery of the inlet port 52. Adjacent the inner periphery, the closure member is sufficiently thin that it can flex when the outer periphery of the closure member is urged upwards, for example if a wave of sewage enters the dome structure and reaches the level of the closure member 62. The outer periphery of the closure member then seals against the top of the dome structure and prevents sewage from entering the cyclonic separator 44. In order to keep the interior of the dome structure clean, its internal surfaces may be coated with PTFE or similar non-stick material and a spray nozzle 64 is mounted immediately above the inlet port 52 for scouring and rinsing the inlet duct 46 of the separator, the closure member 62 and the interior surface of the dome structure 32.

In a modification of the dome structure (not illustrated), the entrance box may be outside the cylindrical wall of the dome structure, in which case a portion of the cylindrical wall serves as the deflector plate. The entrance box communicates with the interior space of the dome structure through an opening in the cylindrical wall.

In the dome structure shown in Figure 2, and in the modification mentioned above, the sewer pipe 10 is disposed substantially radially with respect to the dome structure. Alternatively, the sewer pipe may be disposed transversely to the radius of the dome structure, in which case a side wall of the entrance box serves as the deflector plate.

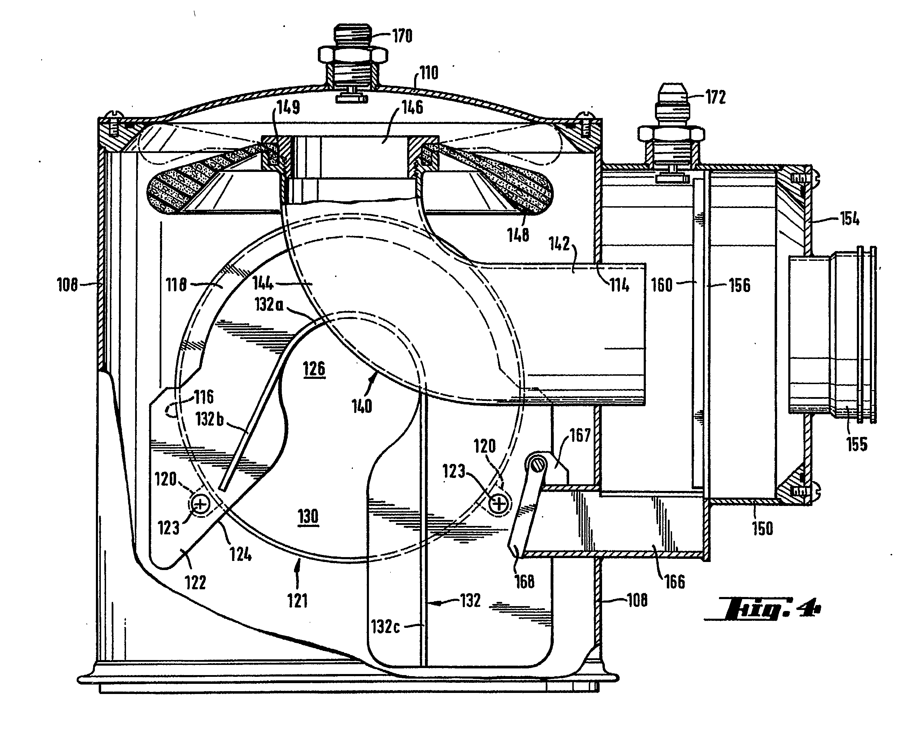

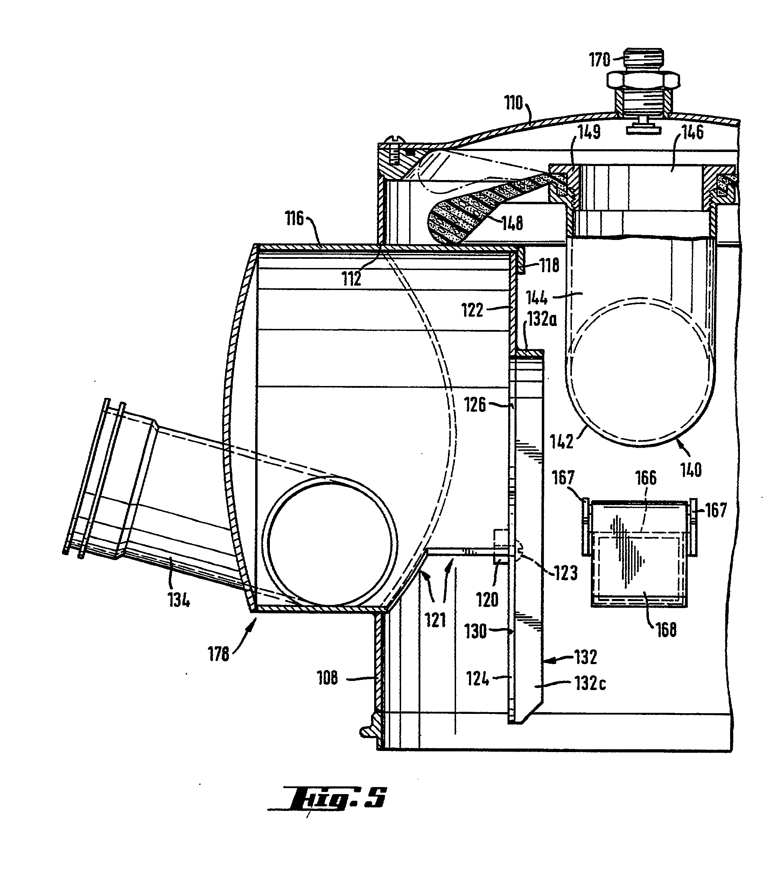

Figures 4 and 5 illustrate an alternative form of the dome structure. The dome structure shown in Figures 4 and 5 has a cylindrical wall 108 and a top 110 that is slightly convex upwards. The wall 108 is formed with two circular openings 112 (Figure 5) and 114 (Figure 4). A separator tube 116 is fitted in the opening 112 and extends radially of the wall 108. The tube 116 is closed at its outer end. At its inner end, the tube 116 is provided with a partial flange 118 and two mounting ears 120 (Figure 4). An outlet slot 121 is formed in the tube 116 at its inner end and extends about one-quarter of the way around the periphery of the tube, from one mounting ear to the other. A vertical plate 122 partially closes the inner end of the tube 116. The upper edge of the plate 122 is curved, and the radius of curvature of the upper edge is equal to the radius of the tube 116. The upper edge of the plate 122 abuts the inner surface of the tube 116 and that face of the plate 122 which is nearer the central axis of the dome engages the flange 118. The plate 122 is attached to the separator tube 116 by screws 123 that extend through the plate 122 and engage the mounting ears 120. The plate 122 is generally U-shaped, defining a notch 124 having a substantially circular portion 126 that lies on the central axis of the cylindrical sleeve and a slot-formed portion 130 that extends radially of the tube 116 from the circular portion 126. A plate 132 is welded to the plate 122 and extends partially around the notch 124. The plate 132 has an arcuate portion 132a that extends along the periphery of the circular portion 126 of the notch 124 and straight portions 132b and 132c that extend tangentially thereto.

The tube 116 defines a separation chamber. An inlet tube 134, which is connected to the vacuum sewer pipe 10, debouches or opens into the separation chamber substantially tangentially. The diameter of the circular portion 126 of the notch 124 is equal to the diameter of the inlet tubes 134. Preferably, the diameter of the inlet tube 134 is about 2 inches (5 cm) and the diameter of the tube 116 is about 5.6 inches (14.2 cm). The overall axial length of the separation chamber is about 10 cm, and the axial length of the separation chamber from the axis of the inlet tube 134, at the point at which the tube 134 opens into the separation chamber, to the plate 122 is about 7 cm.

An outlet tube 140 is mounted in the opening 114. The outlet tube has a straight portion 142 that passes horizontally through the opening 114, and a curved portion 144 that extends from the inner end of the straight portion 142 and curves upwardly through an angle of 90°, so that it defines an inlet opening 146 that is slightly below the top 110 of the dome structure. A reversing closure member 148, similar to that described with reference to Figures 2 and 3, is mounted on the upper end of the tube portion 144 by a clamping ring 149. At its outer end, the outlet tube 140 opens into an outlet chamber, which is defined by a sleeve 150 of larger diameter than the outlet tube 140. The outlet chamber is generally cylindrical, coaxial with the tube portion 142, and is provided at its outer end with an end plate 154, which carries an outlet connection 155 for connecting to the exhaust duct 16. A baffle plate 156 is mounted in the outlet chamber, slightly spaced from the outlet opening of the outlet tube 140. The baffle plate 156 has the form of a vertical strip. At its top and bottom, the width of the plate 156 is slightly smaller than the diameter of the tube 140, and the width of the plate increases smoothly from top and bottom to a maximum value, rather larger than the diameter of the tube 140, at the level of the central axis of the outlet chamber. Ribs 160 extend along the two opposite edges of the baffle plate. At the lower end of the baffle plate is a collection trough 166 that extends through the wall 108. The trough 166 is rectangular in section, and inward of the wall 108 it is covered at the top by a flapper mounting bracket from which two mounting ears 167 extend upwardly, at opposite respective sides of the trough. The mounting ears 167 support a drain flapper plate 168 for pivotal movement about a horizontal axis defined by the ears 167.

Sewage and air flowing through the sewer pipe 10 enter the separate chamber defined by the tube 116 through the inlet tube 134. Because the inlet tube enters substantially tangentially into the separation chamber, the sewage and air enter the separation chamber with a substantial peripheral velocity component, and pass through the separation chamber along a substantially helical path. Due to centrifugal force, the solid and liquid waste material are thrown strongly towards the periphery of the separation chamber, and therefore the material that leaves the separation chamber through the circular portion 126 of the notch 124 is predominantly air, with relatively little waste entrained therein, and the material that leaves the separation chamber through the outlet slot 121 and the slot-formed portion 130 of the notch 124 is predominantly waste material. The arcuate portion 132a of the plate 132 acts as a partial draft tube, while the portion 132b acts as a deflector plate, which is struck by waste leaving the separation chamber through the notch 124 with a large peripheral component of velocity. The waste that strikes the deflector plate falls from the deflector plate into the tank. Some waste is deposited on the arcuate portion 132a of the plate and runs down the straight portions 132b and 132c and falls into the receptacle portion of the tank.

In principle, two separate openings could be provided for discharging air and waste respectively from the separator tube 116. However, the notch 124 avoids the possibility of long objects, such as plastic bags, being caught on a web between two separate openings.

At the inner end of the separator tube 116, the axial component of velocity of sewage is quite small but it is not negligible. The flange 118 prevents the sewage reaching the inner end of the tube 116 from deflecting the upper edge of the plate 122 away from the tube 116.

The air leaving the separation chamber is drawn upwardly, around the closure member 148 and into the outlet tube 140, and passes through the outlet chamber, around the baffle plate 156, to the outlet connection 155. Drops of liquid and small particles of solid material that are entrained in the air flow entering the outlet chamber strike the baffle plate 156 and are caught on the ribs 160 and fall into the collection trough 166. During periods in which there is flow of air through the outlet tube 140, the pressure difference between the interior of the dome structure and the outlet chamber maintains the flapper plate 168 closed. When there is not flow through the outlet tube, the drain flapper plate is able to open, allowing the solid and liquid material in the collection trough 166 to fall into the tank.

The interior surfaces of the dome structure and the outlet chamber are suitably provided with a coating of PTFE so as to resist adhesion of solid material. Similarly, the plate 122 can be coated with PTFE. The interior surface of the sleeve 116 is smooth but is desirably not coated, in order to ensure that sufficient loss of kinetic energy occurs when the sewage passes through the inlet chamber.

The dome structure and the outlet chamber are provided with rinse water connections 170, 172 which are connected to a source of rinse water for spraying the interior of the dome structure and the interior of the outlet chamber from time to time in order to remove material lodged therein.

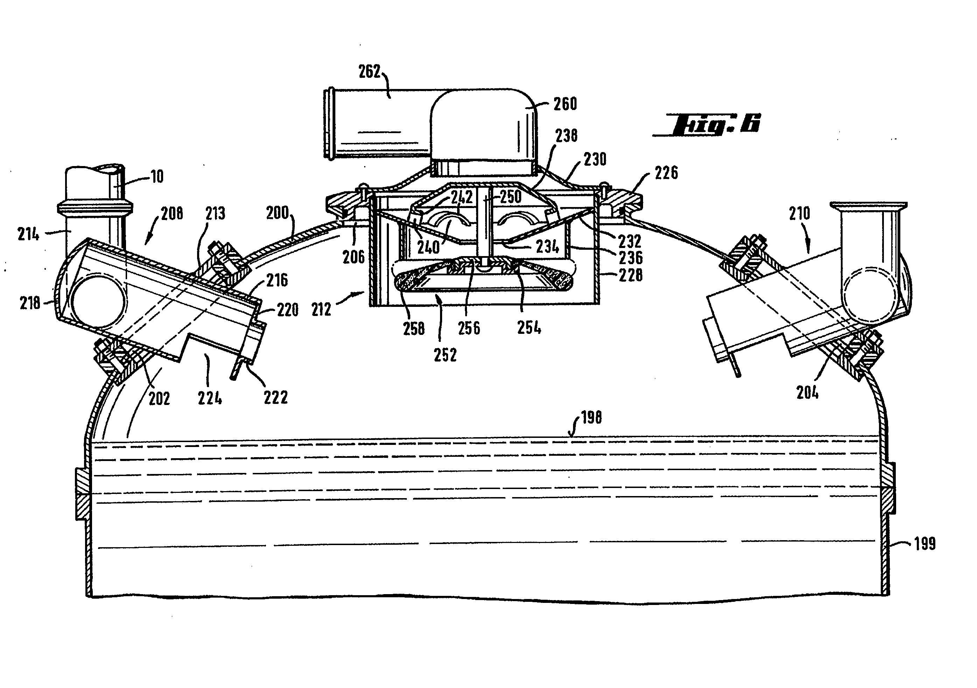

The invention is not limited to use of a dome structure of which the horizontal sectional area is substantially smaller than the horizontal sectional area of the tank. In the case of Figure 6, the dome structure is provided by the top end of a vertically-disposed cylindrical tank 199.

The tank 199 that is partially shown in Figure 6 has a top wall 200 which is formed with three openings 202, 204 and 206. The openings 202 and 204 receive inlet devices 208 and 210, whereas the opening 206, which is at the top of the tank, receives an outlet device 212. The inlet devices 208 and 210 are identical, and therefore only the inlet device 208 will be described. The inlet device 208 comprises a mounting plate 213, which is bolted to the top wall 200 of the tank, and a separator tube 216 fitted in an opening in the mounting plate 213. An inlet tube 214 opens into the tube 216 substantially tangentially. Preferably, the diameter of the inlet tube 214 is about 2 inches (5 cm) and the diameter of the separator tube 216 is about 3 inches (7.5 cm). The separator tube is about 8-10 inches (20-25 cm) long. At its outer end, the separator tube 216 is provided with a cover plate 218. The inner end of the separator tube is formed with an internal flange 220, from which a short draft tube 222 extends coaxially with the separator tube. The diameter of the draft tube 222 is equal to the diameter of the inlet tube 214. A lateral opening 224 is provided in the wall of the separator tube.

The outlet device 212 is secured to the top wall 200 by an annular mounting flange 226. A cylindrical sleeve 228 extends downwards from the mounting flange 226, and a cover plate 230 extends over the opening defined by the flange 226. A frusto-conical plate 232 is secured to the cylindrical sleeve and slopes downwards towards the central axis of the cylindrical sleeve. The frusto-conical plate 232 defines an opening 234. A further cylindrical sleeve 236 is secured to the frusto-conical plate 232, coaxially with the cylindrical sleeve 228, and extends downwardly from the frusto-conical plate 232. A final separator plate 238 is mounted on top of the frusto-conical plate 232. The final separator plate is concave towards the opening 234 in the frusto-conical plate 232, and six part-circular notches 240 are equiangularly distributed about the periphery of the plate 238, whereby six passages are formed between the upper surface of the plate 232 and the final separator plate 238. The final separator plate is provided with an internal flange 242 about each of the notches 240. A rod 250 extends downwardly from the final separator plate 238, through the opening 234, and carries a closure valve assembly 252 at its lower end. The closure valve assembly comprises a pair of clamping discs 254, 256 and an annular reversing closure member 258, similar to that described with reference to Figures 2 and 3, clamped at its inner periphery between the discs 254, 256.

The cover plate 230 defines an opening in which an outlet fitting 260 is mounted. This outlet fitting is provided with an outlet tube 262, which is connected to the exhaust duct 16.

When the Figure 6 tank is installed, the sewer pipe 10 is connected to the inlet device 208 and a second sewer pipe (not shown) is connected to the inlet device 210.

Air and sewage enter the inlet device 208 intermittently by way of the inlet tube 214. Because the inlet tube opens substantially tangentially into the separator tube 216, the sewage and air enter the separator tube with a substantial peripheral velocity component and are separated therein, in the manner described with reference to Figures 4 and 5. The material that leaves the separator tube through the draft tube 222 is predominantly air, with relatively little waste entrained therein, and the material that leaves the separator tube through the lateral outlet 224 is predeominantly waste. Due to friction between the waste and the internal surface of the separator tube, and the viscosity of the waste, most of the kinetic energy of the waste is dissipated as the waste passes through the separator tube. Since the axis of the separator tube 216 is nearly horizontal and the outlet 224 is at the bottom of the tube 216, the waste readily falls from the separator tube.

Air with particles of solid material and droplets of water entrained therein is drawn from the draft tube past the cylindrical sleeve 228, around the periphery of the closure member 258 and into a duct defined by the sleeve 236. The air passes through the opening 234, then through the openings 240 and into the outlet fitting 260. The air must follow a serpentine path in order to reach the outlet fitting 260, and any entrained waste particles and droplets impinge on the surfaces that define that path, so that they are removed from the flow of air. The flow of air through the outlet device 212 is intermittent, and droplets and particles that impinge on the final separator plate 238 are able to fall back into the tank when there is not flow of air through the outlet device.

The plates 232 and 238 are preferably coated with PTFE, which promotes deposit of mist in drops rather than in a sheet, and allows the drops to move readily by gravity. The angle of the generatrix of the frusto-conical plate 232 to the horizontal must be sufficient for the drops to run down the upper surface of the plate 232 under gravity. However, the angle should not be so large that the plate 232 has substantial vertical extension, since this would reduce the maximum usable volume of the tank. It has been found that a suitable angle is about 20°.

The reversing closure member shown in Figure 6 operates in essentially the same way as that described with reference to Figures 2 and 3. It should be noted, however, that the inner periphery of the closure member is not secured about the outlet port, as in the case of Figures 2 and 3, and that the outer periphery of the closure member engages the lower end of the sleeve 236 in order to seal the outlet of the tank.

It will be appreciated that the present invention is not restricted to the particular embodiments that have been described and illustrated, and that variations may be made therein without departing from the scope of the invention as defined in the following claims. In particular, the invention is not limited to a vacuum sewage system for aircraft. The invention is not limited to the specific dimensions referred to above. Thus, in the case of Figures 4 and 5 or Figure 6, it is not essential that the diameters of the inlet tube and the separator tube be as stated. It is necessary only that the relative diameters be such that the inlet tube enters the separator tube at a substantial angle to the radius and that cyclonic separation with dissipation of kinetic energy take place. For example, in the case of Figure 6, the separator tube may be from 2.5 inches (6.3 cm) to 5 inches (12.7 cm) in diameter. The separator tube should be sufficiently long that the sewage executes at least one full turn about the separator tube before leaving the separator tube. It is not essential that the inlet and outlet openings be defined by a dome structure or otherwise be close together. For example, the inlet and outlet openings may be at opposite ends of a horizontally-disposed, cylindrical tank. If the inlet and outlet openings are not defined by a dome structure above the receptacle portion of the tank, the maximum filling level of the tank must be sufficiently low that sewage will not enter the inlet or outlet opening due to wave motion. Wave motion of sewage in the receptacle portion may be suppressed by use of baffles inside the tank. If the inlet and outlet openings are not close together, gravitational separation is enhanced due to the greater residence time of air in the tank. This may permit use of an outlet device similar to that shown in Figure 6 in conjunction with an inlet device that does not rely on centrifugal force to achieve separation. For example, the inlet device may be an entrance box similar to that described with reference to Figure 2. The sewer pipe would open horizontally into the entrance box, and a side wall of the entrance box would serve as a deflector plate.

## Claims

1. A waste tank (12, 199) for a vacuum sewage system installed in a transport vehicle, said tank comprising a receptacle portion for receiving sewage up to a predetermined maximum filling level (198), the tank defining an inlet opening (34, 112) for admitting air and sewage to the tank and an outlet opening (36, 114) for exhausting air from the tank, the inlet opening and the outlet opening being above the maximum filling level characterised in that the tank also comprises an inlet device (78, 178, 208) which is coupled to the inlet opening (34) and is effective to separate air and sewage entering the tank using the kinetic energy of the sewage, and thereby dissipate kinetic energy of the sewage.

2. A waste tank according to claim 1, characterised in that the inlet device is a cyclonic separator (178, 208).

3. A waste tank according to claim 2, characterised in that the cyclonic separator (178, 208) comprises a separator tube (116, 216) having first and second opposite ends and a central axis, an inlet tube (134, 214) for receiving sewage and air and which opens substantially tangentially into the separator tube at the first end thereof.

4. A waste tank according to claim 3, characterised in that the cyclonic separator (178, 208) comprises an end plate (122, 220) at the second end of the separator tube (116, 216), the end plate being formed with at least one opening (124) for allowing sewage and air to leave the cyclonic separator.

5. A waste tank according to claim 4, characterised in that the opening (124) in the end plate (122) has a central portion (126) that lies on the central axis of the separator tube (116) and a slot-formed portion (130) that extends substantially radially from the central portion (126) of the opening (124).

6. A waste tank according to claim 5, characterised in that a second plate (132) is attached to the end plate (122) and extends substantially parallel to the axis of the separator tube (116), the second plate (132) having a deflector portion (132b, 132c) extending adjacent the slot-formed portion (130) of the opening (124) in the end plate, and a draft tube portion (132a) extending at least partially around the central portion (126) of the opening (124) in the end plate (122).

7. A waste tank according to any one of claims 3 to 6, characterised in that the separator tube (116, 216) is formed with an opening (121, 224) in its wall for allowing sewage to leave the inlet device.

8. A waste tank according to any preceding claim, characterised in that an outlet device (44) is coupled to the outlet opening (36, 114) for separating waste from air that enters the outlet device and returning the separated waste to the receptacle portion of the tank.

9. A waste tank according to claim 8, characterised in that the outlet device comprises a duct (140) having an inlet end (146) disposed inside the tank and also having an outlet end, wall means (150) defining a chamber into which said duct opens, the chamber being of larger cross-sectional area than the duct, drop collection means (166) disposed in the chamber for retaining waste entrained with the flow of air entering the chamber, and means (168) for returning waste from the chamber to the interior of the tank.

10. A waste tank according to any preceding claim, characterised in that a closure member (148, 258) is disposed above the maximum filling level for inhibiting entry of waste into the outlet opening.

11. A waste tank according to claim 10, characterised in that the closure member (148, 258) is a generally circular reversing member that has an outer periphery, the closure member having a first condition in which its outer periphery is below a sealing surface (110, 236) and air that enters the tank is able to enter the outlet duct, and in that the closure member can adopt a second condition in which the outer periphery engages the sealing surface and inhibits entry of waste into the outlet duct.

12. A waste tank according to claim 11, characterised in that the closure member (148, 258) is made of silicone rubber and its thickness decreases over at least a part of the range of its radius from its outer periphery to its inner periphery.

13. A waste tank for a vacuum sewage system, said tank comprising a receptacle portion for receiving sewage and a dome structure (108) which is in open communication with the receptacle portion and projects upwardly from the receptacle portion above the maximum filling level of the tank, characterised in that the dome structure (108) defines an inlet opening (112) for admitting air and sewage to the tank and an outlet opening (114) for exhausting air from the tank and contains a separator section (178) for removing sewage from the air between said openings at the expense of kinetic energy extracted from the incoming flow of sewage.

14. A transport vehicle having a vacuum sewage system which comprises at least one sewage-providing unit (4), a waste tank (12) defining an inlet opening (34) and an outlet opening (36), a sewer pipe (10) connecting the sewage-providing unit (4) to the inlet opening (34), a vacuum generator (14), and an exhaust duct (16) connecting the vacuum generator (14) to the outlet opening (36) for establishing a partial vacuum in the waste tank (12), said tank comprising a receptacle portion for receiving sewage up to a predetermined maximum filling level, which is below the inlet opening and the outlet opening, characterised in that the tank also comprises an inlet device (78) which is coupled to the inlet opening (34) and is effective to separate air and sewage entering the tank using the kinetic energy of the sewage, and thereby dissipate kinetic energy of the sewage.

**Revendications**

1. Une cuve de déchets (12, 199) destinée à un système d'égout sous vide installé dans un véhicule de transport, ladite cuve comprenant une partie de réceptacle pour recevoir des eaux vannes jusqu'à un niveau maximal de remplissage prédéterminé (198), la cuve définissant un orifice d'entrée (34, 112) pour admettre de l'air et des eaux vannes dans la cuve et un orifice de sortie (36, 114) pour évacuer l'air hors de la cuve, l'orifice d'entrée et l'orifice de sortie étant au-dessus du niveau maximal de remplissage **caractérisée en ce que** la cuve comprend aussi un dispositif d'entrée (78, 178, 208) qui est accouplé à l'orifice d'entrée (34) et qui agit pour séparer l'air et les eaux vannes entrant dans la cuve en utilisant l'énergie cinétique des eaux vannes et anticipant ainsi l'énergie cinétique des eaux vannes.

2. Une cuve de déchets selon la revendication 1, **caractérisée en ce que** le dispositif d'entrée est un séparateur cyclonique (178, 208).

3. Une cuve de déchets selon la revendication 2, **caractérisée en ce que** le séparateur cyclonique (118, 208) comprend un tube de séparateur (116, 216) comportant une première et une deuxième extrémités opposées et un axe central, un tube d'entrée (134, 114) pour recevoir des eaux vannes et de l'air et qui s'ouvre sensiblement tangentiellement dans le tube de séparateur à la première extrémité de celui-ci.

4. Une cuve de déchets selon la revendication 3, **caractérisée en ce que** le séparateur cyclonique (118, 208) comprend une plaque d'extrémité (122, 220) à la deuxième extrémité du tube de séparateur (116, 207), la plaque d'extrémité comportant au moins un orifice (124) pour permettre aux eaux vannes et à l'air de quitter le séparateur cyclonique.

5. Une cuve de déchets selon la revendication 4, **caractérisée en ce que** l'orifice (124) de la plaque d'extrémité (122) comporte une partie centrale (126) qui est située sur l'axe central du tube de séparateur (116) et une partie en forme de fente (130) qui s'étend sensiblement radialement à partir de la partie centrale (126) de l'orifice (124).

6. Une cuve de déchets selon la revendication 5, **caractérisée en ce que** une deuxième plaque (132) est attachée à la plaque d'extrémité (122) et s'étend sensiblement parallèlement à l'axe du tube de séparateur (116), la deuxième plaque (132) comportant une partie de déflecteur (132b, 132c) s'étendant de manière adjacente à la partie en forme de fente (130) de l'orifice (124) de la plaque d'extrémité, et une partie de tube d'aspiration (132a) s'étendant au moins partiellement autour de la partie centrale (126) de l'orifice (124) de la plaque d'extrémité (122).

7. Une cuve de déchets selon une quelconque des revendications 3 à 6, **caractérisée en ce que** le tube de séparateur (116, 216) comporte un orifice (121, 224) dans sa paroi pour permettre aux eaux vannes de guider le dispositif d'entrée.

8. Une cuve de déchets selon lune revendication précédente quelconque, **caractérisée en ce** qu'un dispositif de sortie (44) est accouplé à l'orifice de sortie (36, 114) pour séparer les eaux vannes de l'air qui entre dans les dispositifs de sortie et renvoyer les déchets séparés vers la partie de réceptacle de la cuve.

9. Une cuve de déchets selon la revendication 8, **caractérisée en ce que** le dispositif de sortie comprend un conduit (140) comportant une extrémité d'entrée (146) disposée à l'intérieur de la cuve et comportant aussi une extrémité de sortie, des moyens de paroi (150) définissant une chambre dans laquelle débouche ledit conduit, la chambre étant d'une section transversale plus importante que le conduit, des moyens de collection de gouttes (166) disposés dans la chambre pour retenir les déchets entraînés avec le flux d'air entrant dans la chambre, et des moyens (168) pour renvoyer les déchets depuis la chambre vers l'intérieur de la cuve.

10. Une cuve de déchets selon une revendication précédente quelconque, **caractérisée en ce** qu'un organe de fermeture (148, 258) est disposé au-dessus du niveau maximal de remplissage pour empêcher l'entrée de déchets dans l'orifice de sortie.

11. Une cuve de déchets selon la revendication 10, **caractérisée en ce que** l'organe de fermeture (148, 258) est un organe d'inversion généralement circulaire qui comporte une périphérie extérieure, l'organe de fermeture présentant une première condition dans laquelle sa périphérie extérieure est au-dessous d'une surface d'étanchéité (110, 236) et l'air qui entre dans la cuve peut entrer dans le conduit de sortie, et en ce que l'organe de fermeture peut adopter une deuxième condition dans laquelle la périphérie extérieure est en contact avec la surface d'étanchéité et empêche l'entrée de déchets dans le conduit de sortie.

12. Une cuve de déchets selon la revendication 11, **caractérisée en ce que** l'organe de fermeture (148, 258) est en caoutchouc de silicone et que son épaisseur décroît sur au moins une partie de la plage de son rayon depuis sa périphérie extérieure vers sa périphérie intérieure

13. Une cuve de déchets destinée à un système d'égout sous vide, ladite cuve comprenant une partie de réceptacle pour recevoir des eaux vannes et une structure en dôme (108) qui est en communication ouverte avec la partie de réceptacle et fait saillie vers le haut à partir de la partie de réceptacle au-dessus du niveau maximal de remplissage de la cuve, **caractérisée en ce que** la stucture de dôme (108) définit un orifice d'entrée (112) pour admettre de l'air et les eaux vannes vers la cuve et un orifice de sortie (114) pour évacuer l'air hors de la cuve et contient une section de séparateur (178) pour enlever les eaux vannes de l'air lesdites ouvertures aux dépens de l'énergie cinétique extraite du flux entrant d'eaux vannes.

14. Un véhicule de transport comportant un système d'égout sous vide qui comprend au moins une unité amenant des eaux vannes (4), une cuve de déchets (12), définissant un orifice d'entrée (34) et un orifice de sortie (36), une tuyauterie d'égout (10) reliant l'unité d'amenée d'eaux vannes (4) vers l'orifice d'entrée (34), un générateur de vide (14), et un conduit d'évacuation (16) reliant le générateur de vide (14) à l'orifice de sortie (36) afin d'établir un vide partiel dans la cuve de déchets (12), ladite cuve comprenant une partie de réceptacle pour recevoir des eaux vannes jusqu'à un niveau maximal de remplissage prédéterminé, qui est au-dessus de l'orifice d'entrée et de l'orifice de sortie, **caractérisée en ce que** la cuve comprend aussi un dispositif d'entrée (78) qui est accouplé à l'orifice d'entrée (34) et qui agit pour séparer l'air et les eaux vannes entrant dans la cuve en utilisant l'énergie cinétique des eaux vannes, et dissiper ainsi l'énergie cinétique des eaux vannes.

**Patentansprüche**

1. Abwassertank (12, 199) für ein in einem Transportfahrzeug installiertes Vakuumabwassersystem, welcher Tank ein Behälterteil zur Aufnahme von Abwasser bis zu einer vorbestimmten maximalen Füllhöhe (198) aufweist, der Tank eine Einlassöffnung (34, 112) zum Einlass von Luft und Abwasser in den Tank und eine Auslassöffnung (36, 114) zum Abblasen von Luft aus dem Tank enthält, wobei die Einlassöffnung und die Auslassöffnung oberhalb des maximalen Füllpegels angeordnet sind, **dadurch gekennzeichnet**, dass der Tank ebenfalls eine Einlassvorrichtung (78, 178, 208) enthält, die mit der Einlassöffnung (34) gekoppelt und wirksam ist zur Trennung von Luft und Abwasser, die in den Tank eintreten, indem die kinetische Energie des Abwassers genutzt und dabei die kinetische Energie des Abwassers verbraucht wird.

2. Abwassertank entsprechend Anspruch 1, **dadurch gekennzeichnet**, dass die Einlassvorrichtung ein Fliehkraftabscheider (178, 208) ist.

3. Abwassertank entsprechend Anspruch 2, **dadurch gekennzeichnet**, dass der Fliehkraftabscheider (178, 208) eine Trennröhre (116, 216) mit ersten und zweiten einander gegenüberliegenden Enden und einer Zentralachse sowie eine Einlassröhre (134, 214) zur Aufnahme von Abwasser und Luft enthält, welche sich im wesentlichen tangential in das erste Ende der Trennröhre öffnet.

4. Abwassertank entsprechend Anspruch 3, **dadurch gekennzeichnet**, dass der Fliehkraftabscheider (178, 208) eine Endplatte (122, 220) an dem zweiten Ende der Trennröhre (116, 216) enthält, wobei die Endplatte mit wenigstens einer Öffnung (124) ausgeformt ist, die dem Abwasser und der Luft das Verlassen des Fliehkraftabscheiders erlaubt.

5. Abwassertank entsprechend Anspruch 4, **dadurch gekennzeichnet**, dass die Öffnung (124) in der Endplatte (122) einen Zentralteil (126) aufweist, der auf der Zentralachse der Trennröhre (116) liegt, und einen schlitzförmigen Teil (130) hat, der sich im wesentlichen radial vom Zentralteil (126) der Öffnung (124) erstreckt.

6. Abwassertank entsprechend Anspruch 5, **dadurch gekennzeichnet**, dass eine zweite Platte (132) an der Endplatte (122) befestigt ist und sich im wesentlichen parallel zur Achse der Trennröhre (116) erstreckt, die zweite Platte (132) einen Ablenkteil (132b, 132c) aufweist, der sich in der Nähe des schlitzförmigen Teils (130) der Öffnung (124) in der Endplatte erstreckt, und ein Saugrohrteil (132a), das sich wenigstens zum Teil rund um den Zentralteil (126) der Öffnung (124) in der Endplatte (122) erstreckt.

7. Abwassertank entsprechend einem der Ansprüche 3 bis 6, **dadurch gekennzeichnet**, dass die Trennröhre (116, 216) mit einer Öffnung (121, 224) in ihrer Wand geformt ist, die dem Abwasser das Verlassen der Einlassvorrichtung erlaubt.

8. Abwasser entsprechend einem der vorigen Ansprüche, **dadurch gekennzeichnet**, dass eine Auslassvorrichtung (44) mit der Auslassöffnung (36, 114) verbunden ist zur Trennung von Abfall von der Luft, die in die Auslassvorrichtung eintritt, und zum Zurückbefördern des abgetrennten Abfalls in den Behälterteil des Tanks.

9. Abwassertank entsprechend Anspruch 8, **dadurch gekennzeichnet**, dass die Auslassvorrichtung einen Kanal (140) mit einem Einlassende (146) im Innern des Tanks und gleichfalls mit einem Auslassende aufweist, eine Wand (150) hat, die eine Kammer bildet, in welche sich besagter Kanal öffnet, wobei die Kammer eine grössere Querschnittsfläche aufweist als der Kanal, eine Tropfensammelvorrichtung (166) aufweist, die in der Kammer angeordnet ist, zur Rückhaltung von Abfall der in dem Luftstrom, der in die Kammer eintritt, mitgeführt wird, und eine Vorrichtung (168) besitzt zur Rückführung von Abfall aus der Kammer in das Innere des Tanks.

10. Abwassertank entsprechend einem der vorigen Ansprüche, **dadurch gekennzeichnet**, dass ein Verschlussbauteil (148, 258) oberhalb des maximalen Füllpegels angeordnet ist zur Verhinderung des Eintritts von Abfall in die Auslassöffnung.

11. Abwassertank entsprechend Anspruch 10, **dadurch gekennzeichnet**, dass das Verschlussbauteil (148, 258) ein allgemein kreisförmiges, umlegbares Bauteil ist, das einen äusseren Umfang hat, das Verschlussbauteil einen ersten Zustand hat, in dem sein äusserer Umfang unterhalb einer Dichtungsfläche (110, 236) ist, und Luft, die in den Tank eintritt, in der Lage ist, in den Auslasskanal einzutreten, und dadurch, dass das Verschlussbauteil einen zweiten Zustand annehmen kann, in dem der äussere Umfang auf die Dichtungsfläche drückt, der Eintritt von Abfall in den Auslasskanal verhindert wird.

12. Abwassertank entsprechend Anspruch 11, **dadurch gekennzeichnet**, dass das Verschlussbauteil (148, 258) aus Silikongummi hergestellt ist und dass dessen Dicke über wenigstens einen Teil des Bereiches seines Radius vom äusseren Umfang zum inneren Umfang abnimmt.

13. Abwassertank für ein Vakuumabwassersystem, wobei besagter Tank einen zur Aufnahme von Abwasser und eine Kuppelstruktur (108) enthält, die in offener Verbindung mit dem Behälterteil ist und vom Behälterteil über den maximalen Füllpegel des Tanks hinaus aufwärtsragt, **dadurch gekennzeichnet**, dass die Kuppelstruktur (108) eine Einlassöffnung (112) zum Einlass von Luft und Abwasser in den Tank sowie eine Auslassöffnung (114) zum Abblasen von Luft aus dem Tank umfasst, und einen Abscheideteil (178) enthält, der das Abwasser aus der Luft zwischen den besagten Öffnungen auf Kosten der kinetischen Energie des einfliessenden Abwassers entfernt.

14. Transportfahrzeug mit einem Vakuumabwassersystem, das wenigstens eine Abwasser produzierende Einheit (4), einen Abwassertank (12) mit einer Einlassöffnung (34) und einer Auslassöffnung (36), ein Abwasserrohr (10), welches die Abwasser produzierenden Einheit (4) mit der Einlassöffnung (34) verbindet, einen Vakuumgenerator (14) und einen Abblaskanal (16) aufweist, der den Vakuumgenerator (14) mit der Auslassöffnung (36) verbindet zur Errichtung eines partiellen Vakuums im Abwassertank (12), welcher Tank einen Behälterteil besitzt zur Anfnahme von Abwasser bis zu einem vorherbestimmten maximalen Füllpegel, der unterhalb der Einlassöffnung und der Auslassöffnung liegt, **dadurch gekennzeichnet**, dass der Tank ebenfalls eine mit der Einlassöffnung (34) gekoppelte Einlassvorrichtung (78) umfasst, welche die Trennung von Luft und Abwasser, die in den Tank eintreten, bewirkt, indem sie die kinetische Energie des Abwassers benutzt und dabei die kinetische Energie des Abwassers verbraucht.

Fig. 1

Fig. 2

Fig. 3

Fig. 4

EP 0 330 490 B1

Fig. 5

Fig. 6

EP 0 330 490 B1